Europäisches Patentamt

European Patent Office

Office européen des brevets

Publication number: **0 274 268**
A2

# EUROPEAN PATENT APPLICATION

Application number: 87311317.9

Int. Cl.⁴: **B60T 11/16** , F16D 25/12

Date of filing: 22.12.87

Priority: 07.01.87 GB 8700210

Date of publication of application:
13.07.88 Bulletin 88/28

Designated Contracting States:
DE ES FR GB IT

Applicant: **LUCAS INDUSTRIES public limited company**
**Great King Street**
**Birmingham, B19 2XF West Midlands(GB)**

Inventor: **Green, Andrew Peter**
**22, Park View Pontrewydd**
**Cwmbran, NP44 1RB South Wales(GB)**

Representative: **Waite, Anthony William et al**
**MARKS & CLERK Alpha Tower Suffolk Street**
**Queensway**
**Birmingham B1 1TT(GB)**

Body to tube attachment.

A master cylinder assembly includes a pressure cylinder (1) and a flange body (2). The flange body has a projecting flange (3) and a hollow part (4) which surrounds the cylinder. The cylinder and hollow part are formed respectively with tapered external and internal surfaces and assembly is effected by bringing the surfaces into engagement and deforming an end portion of the hollow part into engagement with an end of the cylinder to lock the components together.

FIG.I.

EP 0 274 268 A2

## BODY TO TUBE ATTACHMENT.

This invention relates to a method of making an assembly including a metal tube and a surrounding body. and also to such an assembly produced by application of the method and useful, for example. as the pressure cylinder of a vehicle hydraulic system master cylinder for brake or clutch actuation, the surrounding body then including an outwardly projecting flange serving for the mounting of the assembly on a vehicle.

One proposal for securing a surrounding flange to a pressure cylinder is described in our published specification GB 2170289A and employs a spacer element disposed between the flange and an abutment formed by outwardly flaring the open tube end perpendicular to the tube axis, the spacer element being secured at one end to the flange and at its other end to the abutment. This arrangement successfully overcomes certain problems inherent in earlier methods and provides a robust cylinder and flange assembly useful as a master cylinder. However. the present trend, particularly in clutch actuation systems, is to move towards non-serviceable master cylinder assemblies which are thrown away after a period of use and our aforesaid earlier proposal, being relatively expensive to produce. may not be cost-effective for use in this way.

We have also proposed. in our earlier British Patent No.2071797, to flare outwardly the open end of a cylinder to produce an outwardly tapering external surface on the cylinder, to engage a correspondingly internally tapered collar with said surface. and to rivet or bond a piston rod retention device to the collar. Whilst securing the collar to the cylinder in a satisfactory manner. this method is inconvenient in use because of difficulties in accurately holding the components in their final positions during the riveting or bonding step.

An object of the invention, therefore, is to provide a method of making an assembly including a metal tube and surrounding body, such as a flange, which enables such an assembly to be produced more cheaply and conveniently than hitherto.

According to the present invention, a method of making an assembly including a metal tube and a surrounding body comprises forming a hollow part of said body, placing the hollow part in surrounding relationship with the tube, and deforming part of the body in such a manner as to retain abutting surfaces respectively on the tube and hollow part in firm engagement, whereby the tube and body are held securely in assembled relationship by said surfaces and said deformation.

Typically, the tube and body are provided with said respective surfaces prior to being assembled together, assembly then being effected by placing the hollow part in surrounding relationship with the tube and effecting relative movement between the two to bring said surfaces into engagement prior to said deformation of the body.

Preferably, said hollow part is of sufficient length to project beyond the adjacent end of the tube when said abutting surfaces are in mutual engagement and said deformation is applied to the projecting portion so as to bring the latter to a position in which it locks the body and tube against relative movement in one direction.

Said abutting surfaces may comprise outwardly tapered external and internal surfaces respectively of the body and tube.

Conveniently, said projecting portion is bent radially inwardly over the open tube end and advantageously into engagement with the outer surface of a closure component placed over the open tube end against an abutment surface of the tube, so as to retain said component securely in position against said abutment surface.

The invention will now be described, by way of example, with reference to the accompanying drawings in which:-

Figure 1 is a longitudinal cross-section of one form of assembly made by the method of the invention. being a master cylinder for use in a hydraulic system;

Figure 2 illustrates one stage in the method of the invention for producing the master cylinder of Figure 1;

Figure 3 illustrates a stage in the method of the invention subsequent to that illustrated in Figure 2, and

Figures 4 and 5 are views similar to Figure 1 illustrating respective modified embodiments of the assembly of the invention.

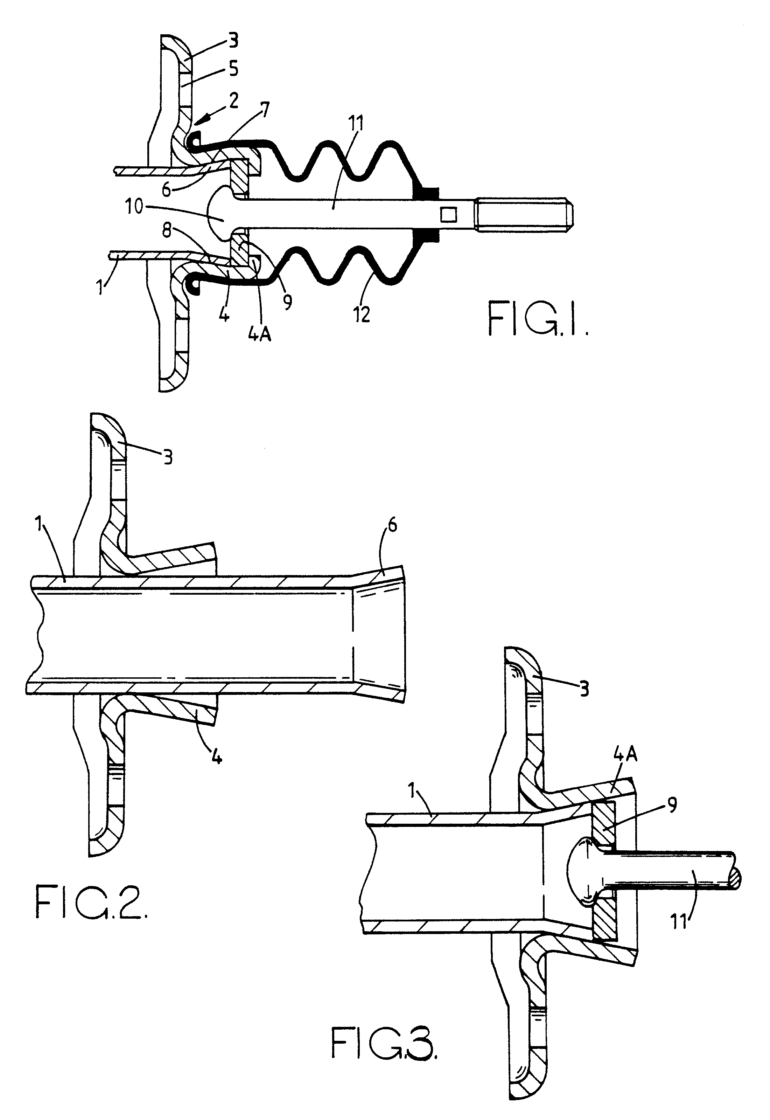

Referring to Figure 1 this illustrates an assembly of the invention in the form of a master cylinder, primarily for use in a vehicle hydraulic clutch actuating system, and including a pressure cylinder, part of which is illustrated at 1, and a flange component, indicated generally at 2 and including a radial flange 3 and a generally cylindrical hollow part 4 extending, in this embodiment, generally at right angles to the flange 3. The flange 3 is provided with holes 5 for the reception of fixing bolts or the like to enable the master cylinder to be secured to a support, such as a vehicle bulkhead. The invention is concerned particularly with the attachment of the flange component 2 to the cylinder 1.

The cylinder 1 is preferably in the form of a drawn tube, initially of uniform cross-section, either open at both ends, in which case one end is subsequently plugged in conventional manner, or formed with an integral closed end. The open end of the tube is outwardly expanded to provide a flared portion 6 having an external tapered surface 7. A portion of the hollow flange component part 4 is similarly outwardly flared to provide an internal tapered surface 8.

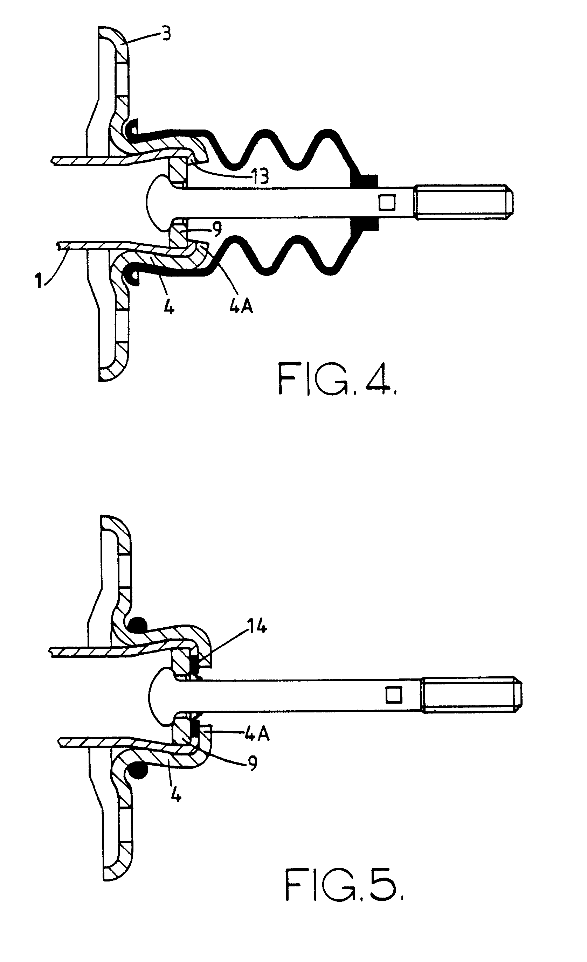

Figure 2 illustrates a first step in the assembly of the components, in which the hollow portion 4 is placed around the tube 1 at the untapered closed end of the latter, the component being illustrated in an intermediate position along the tube. The component is passed along the tube to a position in which the external and internal tapered surfaces 7 and 8 are brought into firm engagement, as illustrated in Figure 3. The hollow part 4 is sufficiently long to project beyond the end of the tube 1 at 4A with the surfaces 7 and 8 engaged as aforesaid and, in the case illustrated, also beyond a retaining washer 9 placed against the end of the tube to close the latter and normally engaged, as shown, by the enlarged head 10 of a force input rod 11 extending through the washer.

The final stage in the method is the radially inward deformation of the projecting part 4A of the hollow part 4 so as to bring it into firm engagement with the retaining washer 9, (Figure 1) thereby preventing relative movement of the flange member and tube in a direction such as to disengage the tapered surfaces. The aforesaid inward deformation also acts to secure the retaining washer 9 securely in position against the end of the tube 1 so as to prevent the withdrawal of the rod 11 from the tube. A boot 12 provides a seal between the rod and an outer surface of the hollow portion 4.

In the modified arrangement illustrated in Figure 4, the retaining washer 9 is placed inwardly of the free end portion 13 of the tube 1, the latter being deformed inwardly to trap the retaining washer between the inwardly turned part 13 and the internally tapered surface of the tube resulting from the outward flaring of the end portion. The outer edge surface of the washer 9 may be correspondingly tapered, if desired. Simultaneously, with the deformation of the tube end portion 13, or as a subsequent operation, the projecting part 4A of the hollow tube part is deformed over said tube end portion 13.

The embodiment of Figure 5 is essentially similar to that of Figure 2, but in this case, the inwardly turned end portion of the hollow part 4 acts to trap a wiper seal 14 against the retention device 9.

The invention will be seen to provide a simple and inexpensive method of securing a flange component to a tube, such as a pressure cylinder and providing the important advantage of simultaneously securing in position a closure/retainer element acting as a backstop for an actuating rod without the necessity for additional components or method steps.

In an alternative form of the method of the invention, the flange component, or any other convenient form of body is placed on the tube prior to the formation of the tapered surfaces and both tapered surfaces are then formed simultaneously in a single step prior to the locking deformation of the component to prevent disengagement of the tapered surfaces. The closure member may abut against a circlip or similar abutment locked internally of the tube, as for example, in a circumferential groove, as an alternative to abutting the tube end or tapered internal tube surface.

Instead of having the tapered surfaces illustrated in the drawings, the flange component and tube may be provided respectively with internal and external radial shoulders, facing surfaces of which are brought into mutual engagement prior to deforming a projecting part of the flange component and/or tube in the manner described above. This modification may be applied to any embodiment of the invention.

## Claims

1. A method of making an assembly including a metal tube (1) and a surrounding body (2), characterised by forming a hollow part (4) of said body, placing the hollow part (4) in surrounding relationship with the tube (1), and deforming part (4A) of the body in such a manner as to retain abutting surfaces (7, 8) respectively on the tube and hollow part in firm engagement, whereby the tube and body are held securely in assembled relationship by said surfaces and said deformation.

2. A method according to Claim 1, characterised in that the tube (1) and body (2) are provided with their respective abutting surfaces (7, 8) prior to being assembled together, assembly then being effected by placing the hollow part in surrounding relationship with the tube and effecting relative movement between the two to bring said surfaces (7, 8) into engagement prior to said deformation of the body.

3. A method according to Claim 1 characterised in that said body (2) is placed in surrounding relationship with the tube (1) prior to the formation of said abutting surfaces (7, 8) which is then effected by simultaneous outward deformation of a portion of the tube and the body surrounding it.

4. A method according to any one of Claims 1 to 3 characterised in that said hollow part (4) is of sufficient length to project beyond the adjacent end of the tube (1) when said abutting surfaces (7, 8) are in mutual engagement and said deformation is applied to the projecting portion (4A) so as to bring the latter to a position in which it locks the body and tube against relative movement in one direction.

5. A method according to Claim 4 characterised in that said projecting portion (4A) is bent radially inwardly over the open tube end.

6. A method according to Claim 4 characterised in that a closure component (9) is placed over the open tube end against and abutment surface of the tube and said projecting portion (4A) is bent radially inwardly over the outer surface of said closure component (9) to retain the component securely in position against said abutment surface.

7. A method according to Claim 6 characterised in that said abutment surface is an end surface of the tube.

8. A method according to any one of Claims 1 to 5 characterised in that a closure component (9) is inserted into the open end of the tube inwardly of the tube free end to engage an internal surface (8) of the tube, the portion (13) of the tube then projecting beyond the component (9) being deformed radially inwardly to retain the component in position against said internal surface (8), an end portion (4A) of said hollow body being radially inwardly deformed over said tube portion (13).

9. A method according to Claim 8 characterised in that deformation of said tube and body end portions (13, 4A) is carried out simultaneously.

10. A method according to any one of the preceding claims characterised in that the deformed body part (4A) retains in position a wiper seal (14) surrounding an actuating rod (11) for a piston slidable within the cylinder.

11. A method according to any one of the preceding claims characterised in that said abutting surfaces are respective outwardly tapered external and internal surfaces (7, 8) respectively of the component (2) and tube (1).

12. A pressure cylinder assembly made by the method of any one of Claims 1 to 11.

FIG.I.

FIG.2.

FIG.3.

FIG.4.

FIG.5.